Europäisches Patentamt

(19) European Patent Office

Office européen des brevets

(11) **EP 0 419 738 B1**

(12) **EUROPEAN PATENT SPECIFICATION**

(45) Date of publication and mention
of the grant of the patent:
**29.01.1997 Bulletin 1997/05**

(51) Int. Cl.⁶: **B29C 47/12**, B29C 47/92,
B60J 10/02

(21) Application number: 89309760.0

(22) Date of filing: **26.09.1989**

(54) **Method of, and apparatus for manufacturing elongate plastic articles**

Verfahren und Vorrichtung zur Herstellung von länglichen Gegenständen

Procédé et dispositif pour la fabrication d'articles allongés

(84) Designated Contracting States:
**DE FR GB IT**

(43) Date of publication of application:
**03.04.1991 Bulletin 1991/14**

(73) Proprietor: **HASHIMOTO FORMING INDUSTRY
CO LTD
Yokohama City Kanagawa Pref. (JP)**

(72) Inventors:
• **Tamura, Tatsuya
Hashimoto Forming Industy Co., Ltd
Yokohama City Kanagawa Pref. (JP)**
• **Hotta, Tetsuo
Hashimoto Forming Industy Co., Ltd
Yokohama City Kanagawa Pref. (JP)**

(74) Representative: **Senior, Alan Murray et al
J.A. KEMP & CO.,
14 South Square,
Gray's Inn
London WC1R 5LX (GB)**

(56) References cited:
EP-A- 0 111 458       EP-A- 0 158 919
DE-A- 3 744 576       FR-A- 2 543 486
FR-A- 2 579 927       GB-A- 2 206 839

• PATENT ABSTRACTS OF JAPAN, vol. 13, no. 506
(M-892)[3854], 14th November 1989; & JP-A-01
204 713 (HASHIMOTO FORMING IND. CO., LTD)
17-08-1989
• PATENT ABSTRACTS OF JAPAN, vol. 13, no. 538
(M-900)[3886], 30th November 1989; & JP-A-01
221 218 (HASHIMOTO FORMING IND. CO., LTD)
04-09-1989
• PATENT ABSTRACTS OF JAPAN, vol. 13, no. 489
(M-888)[3837], 7th November 1989; & JP-A-01
195 032 (HASHIMOTO FORMING IND. CO., LTD)
04-08-1989
• PATENT ABSTRACTS OF JAPAN, vol. 13, no. 489
(M-888)[3837], 7th November 1989; & JP-A-01
195 033 (HASHIMOTO FORMING IND. CO., LTD)
04-08-1989

## Description

The present invention relates to a method of, and an apparatus for manufacturing elongate plastic articles, e.g. molding members for automobiles, having a cross-section which varies in the longitudinal direction of the article.

A variety of molding members are widely used for automobiles, such as front or rear window molding members, body side molding members, etc. Among others, Japanese Patent Application Laid-open Publication No. 61-135,824 discloses a windshield molding member which includes an upper segment to extend along an upper edge of a windshield plate, a pair of side segments to extend along side edges of the windshield plate, and a pair of corner portions connecting the upper and side segments into an integral component.

In the known molding members mentioned above, the upper and side segments are generally composed of a synthetic resin material extruded in to respectively predetermined cross-sections which are basically same with and slightly different from each other. That is, the upper segment includes a main body which is provided with a first lip section to be engaged with the outer surface of a windshield plate, a second lip section to be engaged with the outer surface of a vehicle body panel, and a leg section to be inserted into a gap between the edge of the windshield plate and the body panel. The leg section has fins on both sides to be engaged with the periphery of the windshield plate and the body panel, respectively, so as to prevent undesirable withdrawal of the lip section out of the gap. The upper segment may have an ornamental film and a core element arranged in the main body and the leg section, respectively, depending upon ornamental and/or functional requirements. On the other hand, the side segment has a basic cross-section which is the same as that of the upper segment, as well as an additional cross-section in the form of a ridge on the first lip section, which is adapted to define a weir or channel extending along a side edge of the windshield plate.

The upper segment without the ridge serves to realize a flush outer surface of the automobile body along the upper edge of the windshield plate, while the ridge on the side segment achieves the functions to guide rain water on the windshield plate to flow along the weir or channel, and to thereby prevent the rain water from flowing onto side windows across the side segment and the neighboring body panel portion (or pillar) to disturb the driver's sight through the side windows.

In order to manufacture the upper and side segments of mutually different cross-section, it has been a conventional practice to prepare and use two kinds of exchangeable extrusion dies, one for the upper segments and the other for the side segments, which are expensive and make it thus difficult to reduce the production cost of the molding members. Not only the exchange of the dies requires troublesome and time-consuming manual operations, but also it is necessary, after the exchange of the die and commencement of extrusion of synthetic resin material therefrom, to wait for some time until the die begins to stably extrude a continuous body with a desired accuracy of the cross-section.

Alternate use of different dies to produce different segments of basically same cross-section thus proved to be quite disadvantageous in many cases, particularly when a relatively small number of segments of various cross-sections are to be produced in each production lot. Moreover, use of separate corner segments for connecting the upper and side segments with each other increases the production cost, and may often result in formation of connection lines between the upper and corner segments and also between the corner and side segments, and hence in an undesirable degradation of the appearance.

EP-A-0,111,458 discloses a method and an apparatus for manufacturing a weather strip using an extrusion die whose orifice may be partially closed by a shutter to vary the cross-section of the weather strip.

JP-A-1-195032 discloses a windscreen moulding member having a weir in the side segment only by extruding a body of constant cross-section and cutting away the weir where it is not desired.

JP-A-1-204713 discloses a method of manufacturing a moulding by extruding material from two orifices and then joining the two bodies together whilst they are still soft.

According to one aspect of the present invention, there is provided a method of manufacturing windshield moulding members, the moulding members being solid in cross-section and including a plurality of segments which are connected with each other in the longitudinal direction of the moulding member, each segment having a common cross-sectional portion which is common to all the segments and comprises the main body of the moulding member, at least one segment further having at least one additional cross-sectional portion which comprises a ridge to form a weir when the moulding member is in use, said method being performed using a single extrusion die head with a common orifice having a cross-section which corresponds to that of said common cross-sectional portion of the finished moulding member, and also with at least one additional orifice having a cross-section which corresponds to that of said additional cross-sectional portion of the finished moulding member; and comprising the steps of:

alternately and continuously carrying out a first extrusion phase in which a molten synthetic resin material is extruded from said common orifice of said extrusion die head to form a first-segment, and a second extrusion phase in which molten synthetic resin materials are extruded from said common orifice and at least one of said additional orifices of said extrusion die head, and are caused to adhere with each other while they are still sufficiently hot to achieve an adhesion or are maintained in adhesion, to form a second segment corresponding to the side segment of the moulding member and having said ridge to form a weir;

continuously feeding to said die head a core element having a low elongation relative to said synthetic resin material so that said core element is extruded integrally with said common cross-sectional portion in both extrusion phases; and

determining the extrusion length of the synthetic resin material from said common orifice, and effecting a change from said first extrusion phase to said second extrusion phase, and vice versa, according to the determined length of the synthetic resin material.

According to another aspect of the present invention, there is provided an apparatus for manufacturing windshield moulding members, the windshield moulding members being solid in cross-section and including a plurality of segments which are connected with each other in the longitudinal direction of the moulding member, each segment having a cross-sectional portion which is common to all the segments and comprises the main body of the moulding member, at least one segment further having at least one additional cross-sectional portion comprising a ridge which forms a weir when the moulding member is in use, said apparatus comprising:

a single extrusion die head for extruding synthetic resin material and formed with a common orifice of a cross-section which corresponds to that of said common cross-sectional portion of a segment of the finished moulding member, and also with at least one additional orifice of a cross-section corresponding to that of said additional cross-sectional portion of said at least one segment of the finished moulding member;

means for feeding to said extrusion die head a core element having a low elongation relative to said synthetic resin material so that said core element is extruded integrally with said common cross-sectional portion;

means for determining the extrusion length of the synthetic resin material from said common orifice; and

means for selecting and controlling first and second operational modes of the apparatus in accordance with said determined length such that, in said first operational mode of the apparatus, synthetic resin material is extruded from said common orifice of said die head to form a first extruded body corresponding to a first segment and, in said second operational mode of the apparatus, synthetic resin materials are extruded from said common orifice and at least one additional orifice of said die head and caused to adhere with each other while they are still sufficiently hot to achieve an adhesion or are maintained in adhesion, to form a second extruded body corresponding to a side segment of the moulding member and having said weir.

The present invention makes use of a single extrusion die head with a common orifice and at least one additional orifice. A first segment, e.g. an upper segment of a windshield moulding member, can be formed either by extruding molten synthetic resin material from the common orifice alone, or by extruding resin materials from both the common orifice and the additional orifice while preventing adhesion of the resin material from the additional orifice with the resin material from the common orifice. In the latter case, the resin material from the additional orifice may be recovered and used again. On the other hand, a second segment, e.g. a side segment of the molding member, can be formed by extruding resin materials from both the common orifice and the additional orifice and causing the extruded materials to adhere with each other while they are still sufficiently hot to achieve the adhesion.

The present invention may be applied for manufacturing not only molding members for automobiles, but also various kinds of other elongate articles, such as plastic hoses or tubes with ornamental longitudinal ridges on the outer periphery of the limited longitudinal regions.

Fig. 1 is a perspective view of an automobile including molding members which may be manufactured in accordance with the present invention;

Fig. 2 is a cross-sectional view taken along the line A-A in Fig. 1, showing the upper segment of a windshield molding member;

Fig. 3 is a cross-sectional view taken along the line B-B in Fig. 1, showing the side segment of the molding member;

Fig. 4 is a schematic diagram of a production line which may be used to carry out the method according to the present invention for continuously and alternately manufacturing the upper and side segments of the molding member;

Fig. 5 is a fragmentary sectional view of the extrusion die head, with the guide device assuming one operative position causing the extruded bodies to adhere with each other;

Fig. 6 is a similar sectional view of the extrusion die head, with the movable guide device assuming another operative position to maintain the extruded bodies spaced from each other;

Figs. 7 and 8 are front view and perspective view of the guide device, respectively;

Fig. 9 is a front view of the extrusion die head;

Fig. 10 is a diagram showing the relationship between the feeding length of the core element and the displacement of the cutter element;

Figs. 11 and 12 are fragmentary sectional views of another embodiment of the guide device;

Fig. 13 is a perspective view of the guide device shown in Figs. 11 and 12; and

Figs. 14 and 15 are cross-sectional views taken along the lines C-C and D-D in Fig. 11, respectively.

The present invention will be more fully explained hereinafter, with reference to some preferred embodiments shown in the attached drawings.

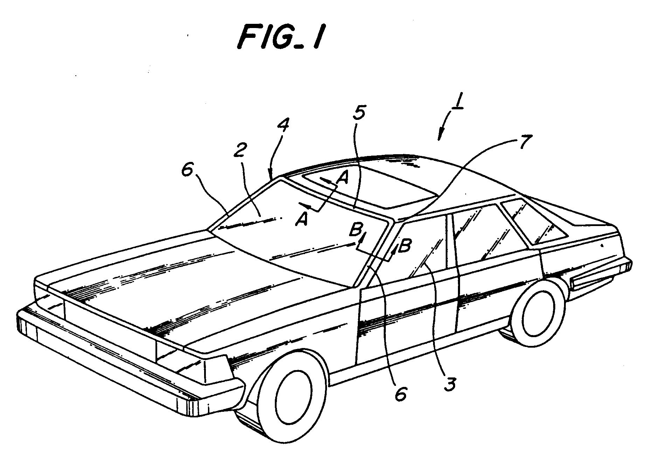

There is shown in Fig. 1 an automobile with a body 1, a windshield plate 2, side windows 3, as well as a windshield molding member 4 which is to be arranged along the periphery of the windshield plate 2, and which may be manufactured in accordance with the present invention. The windshield plate 2 may be an inorganic glass plate or appropriate synthetic resin plate with transparency, such as polycarbonate resin or acryllic resin plate. The molding member 4 includes an upper segment 5 to extend along an upper edge of the windshield plate 2, a pair of side segments 6 to extend along the side edges of the windshield plate 2, and a pair of corner segments 7 connecting the upper and side segments 5, 6 into an integral component.

The molding member 4 may be composed of a soft polyvinyl-chloride (PVC) resin, ionomer resin, ethylenevinyl acetate (EVA) copolymer resin, transparent cellulose acetate butylate (CAB) resin, or of other suitable thermoplastic elastomer or synthetic resin with flexibility, extruded into respectively predetermined cross-sections of the upper and side segments 5, 6 which are basically same and slightly different from each other.

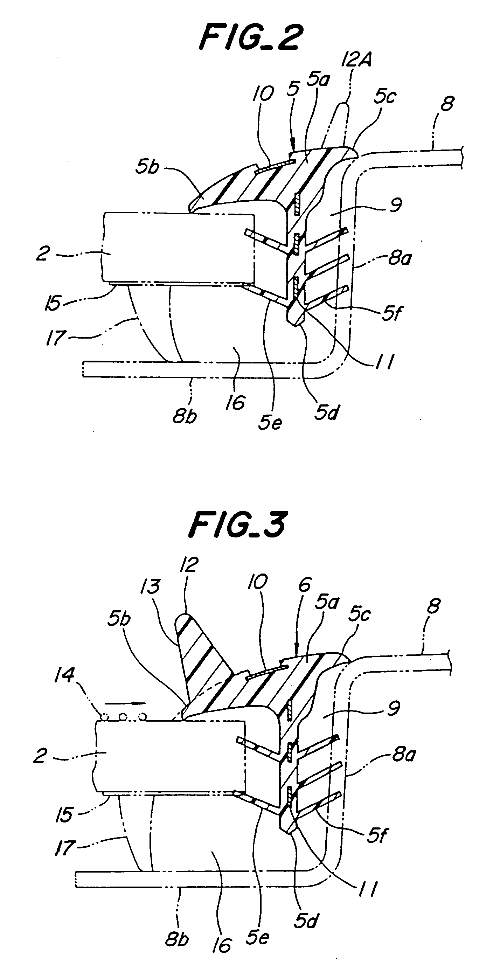

As shown more particularly in Fig. 2, the upper segment 5 includes a main body 5a which is provided with a first lip section 5b to be engaged with the outer surface of a windshield plate 2, a second lip section 5c to be engaged with the outer surface of the vehicle body panel 8, and a leg section 5d to be inserted into a gap 9 between the edge of the windshield plate 2 and a stepped shoulder portion 8a of the body panel 8. The leg section 5d has fins 5e, 5f on its both sides, which are to be engaged with the periphery of the windshield plate 2 and the shoulder portion 8a, respectively, so as to prevent undesirable withdrawal of the leg section 5d out of the gap 9. The upper segment 5 has an ornamental film 10 and core elements 11 arranged in the main body 5a and the leg section 5d, respectively. The cross-section of the upper segment 5 is common to the side segments 6, and will thus be referred to as a "common cross-section".

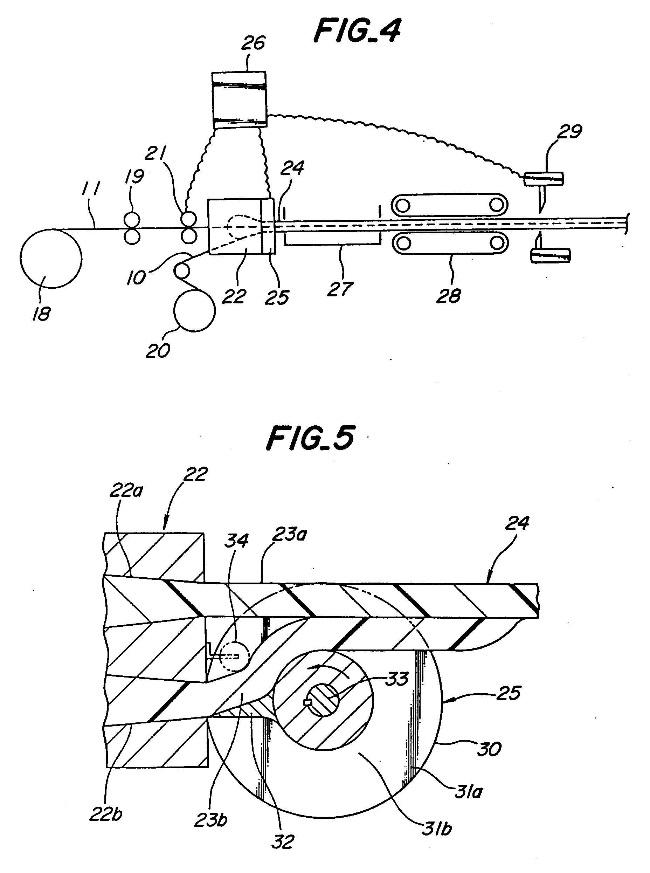

That is, as shown in Fig. 3, the side segment 6 has a basic cross-sectional portion with the above-mentioned common cross-section of the upper segment 5, as well as an "additional cross-sectional portion" in the form of a ridge 12 on the first lip section 5b. The ridge 12 defines a channel or weir 13 extending along a side edge of the windshield plate 2, whereby rain water 14 on the windshield plate 2 can be guided along the ridge 12, and prevented from flowing onto the side windows 3 across the side segment 6 and the neighboring pillar of the vehicle body 1 to disturb the driver's sight through the side windows 3. On the other hand, the upper segment 5 without the ridge 12 on the first lip section 5b has a smooth outer surface, and thus serves to realize a so-called flush outer surface along the upper edge of the windshield plate 2. The corner segment 7 for connecting the upper and side segments 5, 6 into an integral component has a cross-section which gradually changes from that of the upper segment 5 to that of the side segment 6.

When the molding member 4 is for a rear window of an automobile, the side segment 6 need not be provided with the ridge, while the upper segment 5 may be provided with a ridge 12A which is arranged on the second lip section 5c adjacent to the rear edge of the roof panel 8, as shown by imaginary line in Fig. 2. Such a ridge 12A serves to prevent rain water on the roof panel 8 from flowing across the molding member 4 and onto the rear window.

Incidentally, the windshield plate 2 is shown in Figs. 2 and 3 as having a printed opaque layer 15 on the rear surface of its periphery, and being mounted along the periphery on a flange portion 8b of the body panel 8 with an adhesive material 16 and a dam rubber 17 arranged therebetween, in a conventional manner.

Fig. 4 shows the schematic diagram of a production line, which may be used to continuously manufacture the above-mentioned molding member 4 in accordance with the present invention. The production line includes an uncoiler 18 and an associated pinch roller 19 for feeding the core element 11, which may be of a material with a low elongation, such as a metal strip, polyester-based resin sheet or a strand of glass-or carbon-fibers. When the core element 11 is of a profiled cross-section, the pinch roller 19 may be replaced by a roll forming device. The production line further includes another uncoiler 20 for feeding the ornamental film 10 with an excellent weatherability.

The ornamental film 10 and the core element 11 are preferably applied with appropriate adhesive material. The feeding length of the core element 11 is detected by a detector 21, such as a rotary encoder. The ornamental film 10 and the core element 11 are fed to an extrusion die head 22 connected to an extruder, not shown. The extruder is adapted to heat a thermoplastic resin (e.g. PVC resin) to a temperature higher than its softening temperature, which is then fed to the die head 22 in a molten state.

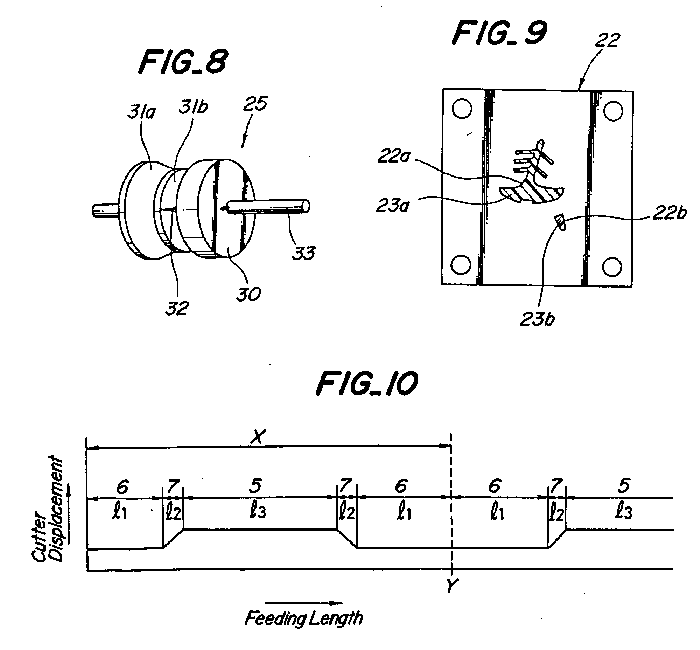

The die head 22 has a pair of orifices 22a, 22b which are arranged spaced from, but preferably close to each other (Fig. 9). The orifice 22a has a cross-section corresponding to that of the basic, common cross-sectional portion of the upper and side segments 5, 6, and will be referred to as a "common orifice". The orifice 22b, in turn, has a cross-section corresponding to that of the additional cross-sectional portion or the ridge 12 of the side segment 6, and will be referred to as an "additional orifice".

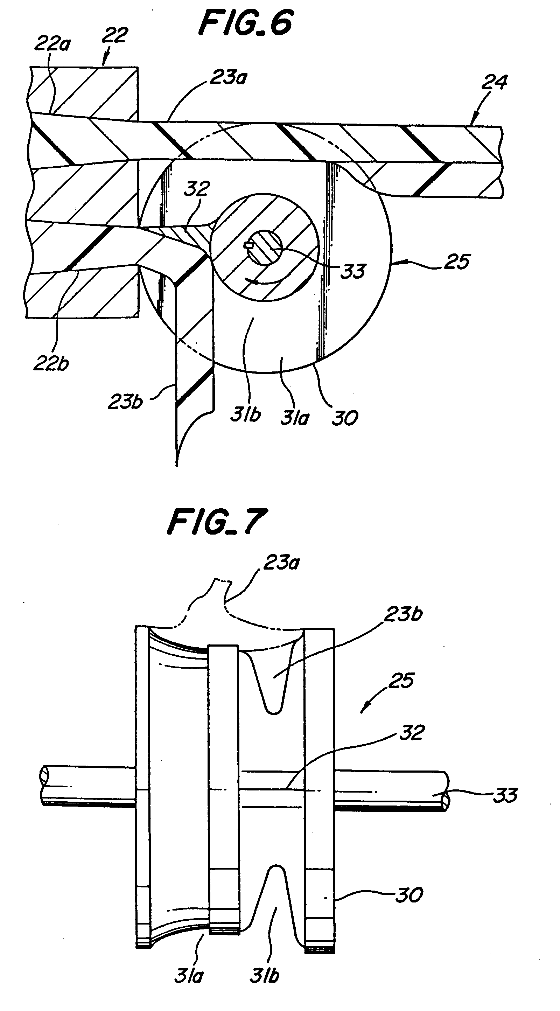

The molten resin fed from the extruder is extruded, together with the ornamental film 10 and the core element 11, from the common orifice 22a and the additional orifice 22b of the die head 22, into extruded bodies 23a, 23b. These extruded bodies 23a, 23b are either caused to adhere with each other, or maintained spaced from each other, immediately after the extrusion, in accordance with the feeding length of the core element 11, thereby to form a desired continuous rod-like body 24. To this end, as also shown in Figs. 5 and 6, a guide device 25 is arranged adjacent to, and on the discharge side of the die head 22, and is controlled by a controller 26 which is connected to the detector 21.

The continuous rod-like body 24, in which the extruded bodies 23a, 23b are either maintained in adhesion with, or spaced from each other according to the feeding length of the core element 11, is subsequently cooled in a cooling tank 27, hauled by a hauling device 28, and cut into a predetermined length of a molding member 4 by a cutting device 29 which also is connected with and controlled by the controller 26 according to the feeding length of the core element 11.

Referring to Figs. 5 to 8, the guide device 25 includes a reciprocably rotatable guide wheel 30, which is formed in its outer periphery with a guide groove 31a for guiding the extruded body 22a corresponding to the common cross-sectional portion of the upper and side segments 5, 6, and also with a guide groove 31b for guiding the extruded body 22b corresponding to the additional cross-sectional portion or the ridge 12 of the side segment 6. The guide device 25 further includes a cutter 32 which extends from the bottom of the groove 31b as far as the periphery of the guide wheel 30, and which is adapted to cut away the extruded body 23b corresponding to the additional cross-sectional portion 12 perpendicularly to its longitudinal direction whenever necessary, as well as a drive shaft 33 connected to a reversible servomotor (not shown) which is controlled by the controller 26.

For a molding member 4 with the side segments 6 of a length $\ell_1$, the corner segments 7 of a length $\ell_2$ and the upper segment of a length $\ell_3$, the relationship between the feeding length of the core element 11 and the angular displacement of the cutter 32 of the guide device 25 is as shown in Fig. 10.

More particularly, starting by way of example from an operational mode shown in Fig. 5 of the production line, the extrusion of the resin is carried out with the cutter 32 of the guide device 25 in abutment with the lower edge of the additional orifice 22b such that the extruded body 23b corresponding to the additional cross-sectional portion 12 of the side segment 6 is guided by the cutter 32 and the guide groove 31b so as to be brought into contact with, and adhesion to the extruded body 23a corresponding to the common cross-sectional portion. This serves to form a side segment 6 of the molding member 4.

As the detector 21 detects the feeding length $\ell_1$ of the core element 11, or completion of the formation of the side segment 6, the servomotor is actuated to drive the shaft 33 at a predetermined angular speed and displace the cutter 32. By this, the cutter 32 is gradually forced into the extruded body 23b to form the corner segment 7.

Upon a subsequent detection of the feeding length $\ell_2$ of the core element 11, or of the completion of the formation of the corner segment 7, the servomotor is stopped by the controller 26. On this occasion, as shown in Fig. 6, the cutter 32 has already been brought into abutment with the upper edge of the additional orifice 22b, after completely cutting away the extruded body 23b corresponding to the additional cross-sectional portion 12. The extruded body 23b is thus guided by the cutter 32 and the guide groove 31b as being maintained spaced from the extruded body 23a, thereby permitting formation of the upper segment 5 with the common cross-sectional portion only.

As the detector 21 detects the feeding length $\ell_3$ of the core element 11, or completion of the formation of the upper segment 5, the servomotor is actuated to drive the shaft 33 in a reverse direction and displace the cutter 32 back to its initial position shown in Fig. 5 into abutment with the lower edge of the additional orifice 22b, after cutting away the extruded body 23b. Thus, the extruded body 23b corresponding to the additional cross-sectional portion 12 of the side segment 6 is guided by the cutter 32 and the guide groove 31b so as to be brought into contact with and adhesion to the extruded body 23a to form another side segment 6.

The above-mentioned steps are repeated to continuously produce a desired number of the molding members 4. It is of course that the individual molding member 4 are obtained by cutting the continuous rod-like body 24 by means of the cutting device 29. The length of each molding member 4 ($=2\ell_1+2\ell_2+\ell_3$) is represented in Fig. 7 by X, and the location of the continuous rod-like body 24 to be subjected to the cutting is shown at Y.

The resin material to be extruded from the common orifice 22a and the additional orifice 22b may be same with, or different from each other, e.g. in color, transparency and/or hardness. In the latter case, the extrusion die head 22 is associated with two extruders and is preferably fed with mutually compatible resins. If the mutually compatible resins do not still exhibit a good adhesion to each other, or when resins having poor compatibility with each other are used the extruded body 22b for the additional cross-sectional portion 12 may be applied with an adhesive material by a roll coater 34 as shown in Fig. 5 immediately after it has been extruded from the orifice 22b. Furthermore, because the extruded bodies 23a, 23b are guided by the grooves 31a, 31b in a still hot state of the resin, these grooves are preferably composed of stainless steel, ceramics, appropriate synthetic resin or the like, having a smooth outer surface and exhibiting a poor adhesion to the extruded bodies 23a, 23b.

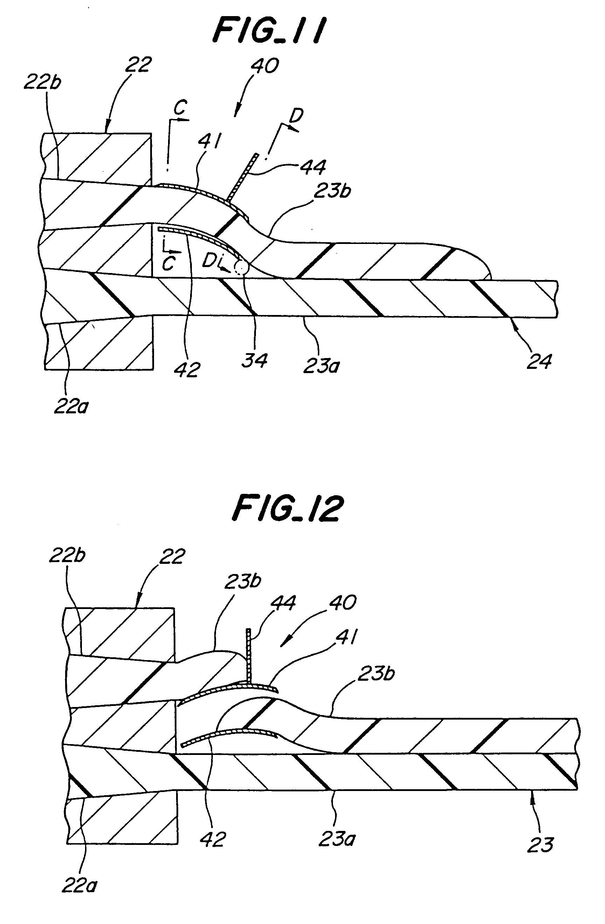

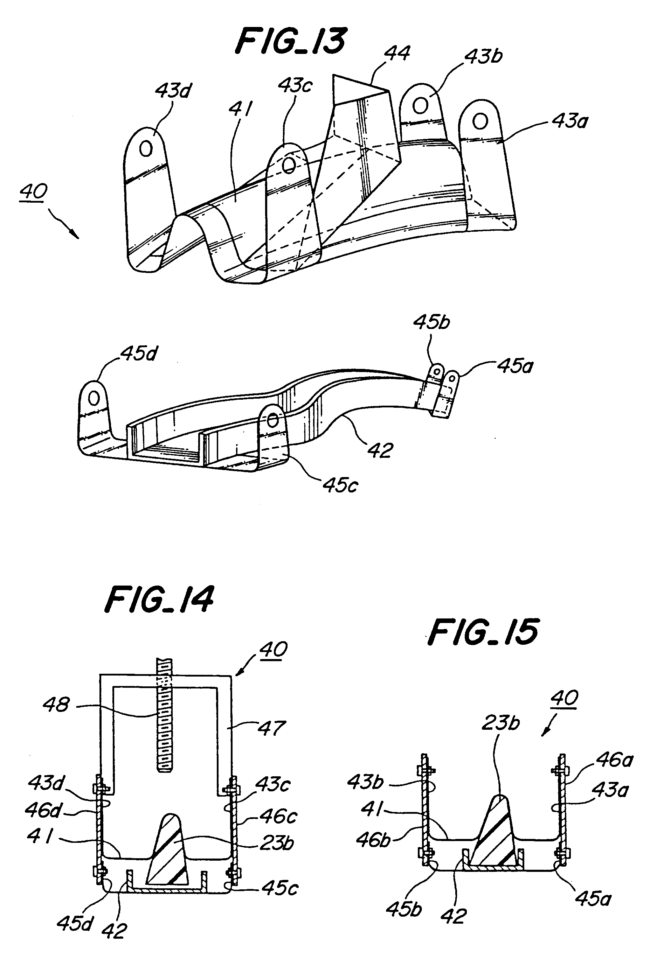

There is shown in Figs. 11 to 15 another embodiment of the guide device arranged adjacent to the extrusion die head 22 wherein the common orifice 22a is situated below the additional orifice 22b. The guide device according to the present embodiment, designated as a whole by reference numeral 40, includes a cutter element 41 on the upper side, and a support element 42 on the lower side, which are vertically spaced from each other by a predetermined distance. The cutter element 41 and the support element 42 are adapted to swing about respective horizontal axes near their front ends, such that their rear ends adjacent to the die head 22 are reciprocably movable in a vertical direction.

The cutter element 41 has a cross-section which conforms with the outer contour of the extruded body 23b or of the additional cross-sectional portion 12 of the molding member 4, and is provided with brackets 43a-43d on both sides of the front and rear ends, as well as a stopper 44 formed thereon. The support element 42 has a cross-section which conforms with the bottom of the extruded body 23b, and is provided with brackets 45a-45d on both sides of the front and rear ends. The brackets 43a-43d of the cutter element 41 are connected to the brackets 45a-45d of the support element 42 by link elements 46a-46d, respectively, such that the cutter element 41 and the support element 42 are jointly moved maintaining a constant space therebetween. The link elements 46c and 46d are connected by a bifurcated arm 47 to a threaded drive shaft 48. The drive shaft 48 is connected to a servomotor (not shown) which is controlled by a controller in accordance with the feeding length of the core element 11 as in the previous embodiment.

In order to avoid an undesirable interference of the cutter element 41 with the extrusion die head 22, preferably, the rear end of the cutter element 41 and the front end surface of the die head 22 each has a radius of curvature which conforms to the trajectory of the rear end of the cutter element 41. The support element 42 may be constructed in the same manner, or may alternatively be spaced a slight distance from the additional orifice 22b in the die head 22.

The support element 42 has a width which gradually decreases forwardly from its rear end adjacent to the die head 22. Thus, the extruded body 23b corresponding to the additional cross-sectional portion 12 can be positively supported by the support element 42, and accurately guided onto the desired location of the extruded body 23a which, in turn, corresponds to the common cross-sectional portion of the molding member 4. Advantageously, the support element 42 has a smooth sliding surface for the extruded body 23b, to reduce the sliding resistance and avoid an undesirable deformation of the extruded body 23b.

With the above-mentioned arrangement of the guide device 40, in order to form the side segment 6, the extruded body 23b is caused to adhere to the extruded body 23a in the operational mode shown in Fig. 11. Thereafter, the drive shaft 48 is rotated by the servomotor to lower the rear ends of the cutter element 41 and the support element 42 so that the extruded body 23b for the additional cross-sectional portion 12 is cut by the cutter element 41. On this occasion, the extruded body 23b comes into abutment with the stopper 44, and is thereby deflected toward one side of the device 40 and then vertically downwardly by the gravity. By this, the extruded body 23b is maintained out of contact with the extruded body 23a to form the upper segment 5 of the molding member 4, and may be collected into a receptacle to be used once again, if desired. Furthermore, when it is necessary to apply adhesive material to the extruded body 23b before it is brought into adhesion with the extruded body 22a, the guide device 40 may be associated with a roll coater 34 as shown by an imaginary line in Fig. 11.

In the embodiment shown in Figs. 11 to 15, when the extruded body 22b for the additional cross-sectional portion 12 is extruded on the lower side of the extruded body 22a for the common cross-sectional portion, the region of the extruded body 22b to be adhered to the extruded body 22a has to be supported by the support element 42, while the region of the extruded body 22b to be prevented from adhesion to the extruded body 22a can be guided vertically downwardly by the gravity. Conversely, when the extruded body 22b for the additional cross-sectional portion 12 is extruded on the upper side of the extruded body 22a for the common cross-sectional portion, the region of the extruded body 22b to be adhered to the extruded body 22a can be guided vertically downwardly by the gravity into contact with the extruded body 23a, while the region of the extruded body 22b to be prevented from adhesion to the extruded body 22a has to be guided by the guide device 40. The common orifice 22a and the additional orifice 22b may be spaced from each other not only in the vertical direction, but also in the horizontal direction.

The operation of the production line may be controlled in accordance, not only with the feeding length of the core element 11, but also with the extruded length or hauling length of the rod-like body 24. Finally, instead of selectively causing the extruded body 23b to adhere to the extruded body 23a or to be maintained spaced therefrom after it has been extruded from the additional orifice 22b, the die head 22 may have an inner gate for allowing or interrupting extrusion of the resin from the additional orifice 22b.

It will be appreciated from the foregoing description that, in accordance with the present invention, it is readily possible to reliably manufacture different segments of basically same and slightly different cross-section in an alternate and continuous manner and with a higher productivity, using a single extrusion die head with a common orifice and at least one additional orifice, and by selectively preventing adhesion of the extruded resin materials from the common orifice and the additional orifice, or causing the extruded materials to adhere with each other.

The present invention thus allows manufacture of various elongate articles, including molding members, having an excellent appearance with a smooth outer surface throughout the entire length, and without significant connection lines between different segments, as well as a remarkable reduction in the manufacturing cost.

## Claims

1. A method of manufacturing windshield moulding members, the moulding members being solid in cross-section and including a plurality of segments which are connected with each other in the longitudinal direction of the moulding member, each segment having a common cross-sectional portion which is common to all the segments and comprises the main body of the moulding member, at least one segment further having at least one additional cross-sectional portion which comprises a ridge to form a weir when the moulding member is in use, said method being performed using a single extrusion die head (22) with a common orifice (22a) having a cross-section which corresponds to that of said common cross-sectional portion of the finished moulding member, and also with at least one additional orifice (22b) having a cross-section which corresponds to that of said additional cross-sectional portion of the finished moulding member; and comprising the steps of:

   alternately and continuously carrying out a first extrusion phase in which a molten synthetic resin material is extruded from said common orifice of said extrusion die head to form a first segment (5), and a second extrusion phase in which molten synthetic resin materials are extruded from said common orifice and at least one of said additional orifices of said extrusion die head, and are caused to adhere with each other while they are still sufficiently hot to achieve an adhesion or are maintained in adhesion, to form a second segment (7) corresponding to the side segment of the moulding member and having said ridge to form a weir; continuously feeding to said die head a core element (11) having a low elongation relative to said synthetic resin material so that said core element is extruded integrally with said common cross-sectional portion in both extrusion phases; and determining the extrusion length of the synthetic resin material from said common orifice, and effecting a change from said first extrusion phase to said second extrusion phase, and vice versa, according to the determined length of the synthetic resin material.

2. The method as claimed in claim 1, wherein a molten synthetic resin material is extruded from said additional orifice during said first extrusion phase, and is prevented from adhering to said synthetic resin material extruded from said common orifice.

3. The method as claimed in claim 2, further comprising the step of cutting said synthetic resin material extruded from said additional orifice when effecting a change from said first extrusion phase to said second extrusion phase, and vice versa.

4. The method as claimed in claim 1, 2 or 3 further comprising the step of using a common extruder adapted to feed a molten synthetic resin material to said common orifice of said die head, as well as at least one additional extruder adapted to feed a molten synthetic resin material to said at least one additional orifice of said die head.

5. The method as claimed in any preceding claim, wherein synthetic resin materials are extruded from said common orifice and said at least one additional orifice such that said at least one segment has said common cross-sectional portion which is different in colour, transparency and/or hardness from said additional cross-sectional portion thereof.

6. The method as claimed in any preceding claim, further comprising the steps of:

   using a single extruder adapted to feed molten synthetic resin material to said orifices of said die head; and
   maintaining, during the formation of a segment without said additional cross-sectional portion, the synthetic resin material extruded from said common orifice spaced from the synthetic resin material extruded from said additional orifice.

7. An apparatus for manufacturing windshield moulding members, the windshield moulding members being solid in cross-section and including a plurality of segments which are connected with each other in the longitudinal direction of the moulding member, each segment having a cross-sectional portion which is common to all the segments and comprises the main body of the moulding member, at least one segment further having at least one additional cross-sectional portion comprising a ridge which forms a weir when the moulding member is in use, said apparatus comprising:

   a single extrusion die head (22) for extruding synthetic resin material and formed with a common orifice of a cross-section which corresponds to that of said common cross-sectional portion of a segment of the finished moulding member, and also with at least one additional orifice of a cross-section corresponding to that of said additional cross-sectional portion of said at least one segment of the finished moulding member;
   means (18, 19, 21) for feeding to said extrusion die head a core element (11) having a low elongation relative to said synthetic resin material so that said core element is extruded integrally with said common cross-sectional portion;

means for determining the extrusion length of the synthetic resin material from said common orifice; and

means (26) for selecting and controlling first and second operational modes of the apparatus in accordance with said determined length such that, in said first operational mode of the apparatus, synthetic resin material is extruded from said common orifice of said die head to form a first extruded body corresponding to a first segment (5) and, in said second operational mode of the apparatus, synthetic resin materials are extruded from said common orifice and at least one additional orifice of said die head and caused to adhere with each other while they are still sufficiently hot to achieve an adhesion or are maintained in adhesion, to form a second extruded body corresponding to a side segment (7) of the moulding member and having said weir.

8. The apparatus as claimed in claim 7, wherein said die head is associated with a single extruder.

9. The apparatus as claimed in claim 7, wherein said die head is associated with an extruder for said common orifice (22a), and at least one another extruder for said at least one additional orifice (22b).

10. The apparatus as claimed in claim 9, wherein said means for selecting and controlling the first and second operational modes of the apparatus comprises a switch means for maintaining said another extruder out of operation in said first operational mode of the apparatus, and for maintaining said another extruder in operation in said second operational mode of the apparatus.

11. The apparatus as claimed in claim 7 or 8, wherein said means for selecting and controlling the first and second operational modes of the apparatus comprises a gate arranged in said die head for selectively allowing and interrupting extrusion of the synthetic resin material from said additional orifice.

12. The apparatus as claimed in claim 7, 8, 9, 10 or 11, wherein said means for selecting and controlling the first and second operational modes of the apparatus comprises a guide means (32) adapted to be moved between a first position for forming said first segment, and a second position for forming said second segment.

13. The apparatus as claimed in claim 12, wherein said guide device includes a cutter means for cutting said synthetic resin material extruded from said additional orifice when effecting a change from said first operational mode to said second operational mode, and vice versa.

14. A windshield moulding member (4) manufactured according to the method of any one of claims 1 to 6 for automobiles or the like, said moulding member being solid in cross-section and comprising:

an elongate main body (5a) for covering a gap (9) between an automobile body panel (8, 8a) and upper and side edges of a windshield plate (2), said main body (5a) comprising a synthetic resin material extruded into a cross-section which is substantially constant in a longitudinal direction of the main body (5a) and having a core element (11) of low elongation relative to the synthetic resin material integral therewith; said main body (5a) having an outer surface and a rear side; and

means (5d, 5e, 5f) provided on the rear side of the main body (5a) for engaging with at least one of the windshield plate (2) and the automobile body panel (8, 8a) to thereby retain the moulding member (4) in place;

said main body (5a) having an upper segment (5) to extend along the upper edge of the windshield plate (2), a side segment (6) to extend along the side edge of the windshield plate (2), and a corner segment (7) integrally and continuously connecting said upper and side segments (5, 6) with each other;

said outer surface of the main body (5a) being integrally provided with a ridge (12) along said side segment (6), said ridge (12) projecting in a direction intersecting the outer surface of the main body (5a) so that said moulding member (4) has a first cross-section along said upper segment (5), a second cross-section along said side segment (6) and a third cross-section in the corner section joining said upper and side segments, said second cross-section being different from said first cross-section and said third cross-section gradually changing from the first cross-section to the second cross-section through the corner segment;

said ridge (12) being substantially absent in the upper segment but forming a weir (13) along said side segment (6) of the main body (5a) when the moulding member (4) is mounted in place, such that water on the windshield plate (2) is collected by, and guided to flow along the weir (13) while being prevented from flowing across the moulding member (5);

said ridge (12) comprising a synthetic resin material extruded synchronously with the synthetic resin material forming the main body (5a) and integrally welded thereto.

15. The windshield moulding member (4) as claimed in claim 14, wherein said ridge (12) comprises a synthetic resin material which is substantially same as the synthetic resin material forming the main body (5a).

16. The windshield moulding member (4) as claimed in claim 14 or 15, wherein said ridge (12) comprises a synthetic resin material which is different in colour from the synthetic resin material forming the main body (5a).

17. The windshield moulding member (4) as claimed in claim 14, 15 or 16, wherein said ridge (12) comprises a synthetic resin material which is different in transparency from the synthetic resin material forming the main body (5a).

18. The windshield moulding member (4) as claimed in claim 14, 15, 16 or 17, wherein said ridge (12) comprises a synthetic resin material which is different in hardness from the synthetic resin material forming the main body (5a).

19. The windshield moulding member (4) as claimed in any one of claims 14 to 18, wherein said outer surface of the main body (5a) is substantially smooth along said upper segment (5).

20. The windshield moulding member (4) as claimed in any one of claims 14 to 19, wherein said outer surface of the main body (5a) is provided with a longitudinal ornamental strip (10) along an entire length of the moulding member (4), at a region which is free from said ridge (12).

**Patentansprüche**

1. Verfahren zum Herstellen von Windschutzscheibenformteilen, wobei die Formteile im Querschnitt massiv sind und mehrere Segmente enthalten, die in Längsrichtung des Formteils miteinander verbunden sind, wobei jedes Segment einen gemeinsamen Querschnittsabschnitt besitzt, der sämtlichen Segmenten gemeinsam ist und den Hauptkörper des Formteils enthält, wobei wenigstens ein Segment ferner wenigstens einen zusätzlichen Querschnittsabschnitt besitzt, der eine Leiste enthält, um ein Wehr zu bilden, wenn das Formteil in Gebrauch ist, wobei das Verfahren unter Verwendung eines einzelnen Strangpreßkopfs (22) ausgeführt wird, der eine gemeinsame Öffnung (22a) mit einem Querschnitt, der demjenigen des gemeinsamen Querschnittsabschnitts des fertiggestellten Formteils entspricht, sowie außerdem wenigstens eine zusätzliche Öffnung (22b) mit einem Querschnitt umfaßt, der demjenigen des zusätzlichen Querschnittsabschnitts des fertiggestellten Formteils entspricht; und die folgenden Schritte enthält:

abwechselndes und ununterbrochenes Ausführen einer ersten Strangpreßphase, in der geschmolzenes Synthetikharzmaterial aus der gemeinsamen Öffnung des Strangpreßkopfs stranggepreßt wird, um ein erstes Segment (5) zu bilden, sowie einer zweiten Strangpreßphase, in der geschmolzene Synthetikharzmaterialien von der gemeinsamen Öffnung und wenigstens einer der zusätzlichen Öffnungen des Strangpreßkopfs stranggepreßt werden und dazu veranlaßt werden, aneinander zu haften, solange sie ausreichend heiß sind, um eine Haftung zu erzielen, oder in Haftung gehalten werden, um ein zweites Segment (7) zu bilden, das dem Seitensegment des Formteils entspricht und die Leiste für die Bildung eines Wehrs besitzt;

kontinuierliches Zuführen eines Kernelements (11) an den Preßkopf, wobei das Kernelement relativ zum Synthetikharzmaterial eine niedrige Dehnung besitzt, so daß das Kernelement in beiden Strangpreßphasen einteilig mit dem gemeinsamen Querschnittsabschnitt stranggepreßt wird; und

Bestimmen der Strangpreßlänge des Synthetikharzmaterials von der gemeinsamen Öffnung und Ausführen eines Wechsels von der ersten Strangpreßphase zur zweiten Strangpreßphase und umgekehrt entsprechend der bestimmten Länge des Kunstharzmaterials.

2. Verfahren nach Anspruch 1, in dem während der ersten Strangpreßphase ein geschmolzenes Kunstharzmaterial von der zusätzlichen Öffnung stranggepreßt und davon abgehalten wird, an dem von der gemeinsamen Öffnung stranggepreßten Synthetikharzmaterial anzuhaften.

3. Verfahren nach Anspruch 2, ferner mit dem Schritt des Schneidens des von der zusätzlichen Öffnung stranggepreßten Synthetikharzmaterials, wenn ein Wechsel von der ersten Strangpreßphase zur zweiten Strangpreßphase und umgekehrt ausgeführt wird.

4. Verfahren nach Anspruch 1, 2 oder 3, ferner mit dem Schritt des Verwendens einer gemeinsamen Strangpreßvorrichtung, die so beschaffen ist, daß sie geschmolzenes Synthetikharzmaterial der gemeinsamen Öffnung des Preßkopfs zuführt, sowie wenigstens einer zusätzlichen Strangpreßvorrichtung, die so beschaffen ist, daß sie ein geschmolzenes Synthetikharzmaterial der wenigstens einen zusätzlichen Öffnung des Preßkopfs zuführt.

5. Verfahren nach irgendeinem vorangehenden Anspruch, in dem die Synthetikharzmaterialien von der gemeinsamen Öffnung und der wenigstens einen zusätzlichen Öffnung in der Weise stranggepreßt werden, daß das wenigstens eine Segment einen gemeinsamen Querschnittsabschnitt besitzt, der sich hinsichtlich der Farbe, der Lichtdurchlässigkeit und/oder der Härte von dessen zusätzlichen Querschnittsabschnitt unterscheidet.

6. Verfahren nach irgendeinem vorangehenden Anspruch, ferner mit den Schritten:

Verwenden einer einzigen Strangpreßvorrichtung, die so beschaffen ist, daß sie den Öffnungen des Preßkopfs geschmolzenes Synthetikharzmaterial zuführt; und Halten des von der gemeinsamen Öffnung stranggepreßten Synthetikharzmaterials in einem Abstand von dem von der zusätzlichen Öffnung stranggepreßten Synthetikharzmaterial während der Bildung eines Segments ohne den zusätzlichen Querschnittsabschnitt.

7. Vorrichtung zum Herstellen von Windschutzscheibenformteilen, wobei die Windschutzscheibenformteile im Querschnitt massiv sind und mehrere Segmente enthalten, die in Längsrichtung des Formteils miteinander verbunden sind, wobei jedes Segment einen Querschnittsabschnitt besitzt, der sämtlichen Segmenten gemeinsam ist und den Hauptkörper des Formteils enthält, wobei wenigstens ein Segment ferner wenigstens einen zusätzlichen Querschnittsabschnitt besitzt, der eine Leiste enthält, die ein Wehr bildet, wenn das Formteil in Gebrauch ist, wobei die Vorrichtung enthält:

einen einzigen Strangpreßkopf (22) zum Strangpressen von Synthetikharzmaterial, der versehen ist mit einer gemeinsamen Öffnung mit einem Querschnitt, der demjenigen des gemeinsamen Querschnittsabschnitt eines Segments des fertiggestellten Formteils entspricht, und außerdem wenigstens einer zusätzlichen Öffnung mit einem Querschnitt, der demjenigen des zusätzlichen Querschnittsabschnitts des wenigstens einen Segments des fertiggestellten Formteils entspricht; eine Einrichtung (18, 19, 21) zum Zuführen eines Kernelements (11) an den Strangpreßkopf, wobei das Kernelement relativ zum Synthetikharzmaterial eine niedrige Dehnung besitzt, so daß das Kernelement einteilig mit dem gemeinsamen Querschnittsabschnitt stranggepreßt wird; eine Einrichtung zum Bestimmen der Strangpreßlänge des Synthetikharzmaterials von der gemeinsamen Öffnung; und eine Einrichtung (26) zum Auswählen und Steuern einer ersten und einer zweiten Betriebsart der Vorrichtung in Übereinstimmung mit der bestimmten Länge, derart, daß in der ersten Betriebsart der Vorrichtung Synthetikharzmaterial von der gemeinsamen Öffnung des Preßkopfs stranggepreßt wird, um einen ersten Strangpreßkörper zu bilden, der einem ersten Segment (5) entspricht, und in der zweiten Betriebsart der Vorrichtung Synthetikharzmaterialien von der gemeinsamen Öffnung und wenigstens einer zusätzlichen Öffnung des Preßkopfs stranggepreßt werden und dazu veranlaßt werden, aneinander zu haften, solange sie ausreichend heiß sind, um eine Haftung zu erzielen, oder in Haftung gehalten werden, um einen zweiten stranggepreßten Körper zu bilden, der einem zweiten Segment (7) des Formteils entspricht und das Wehr besitzt.

8. Vorrichtung nach Anspruch 7, in der dem Preßkopf eine einzelne Strangpreßvorrichtung zugeordnet ist.

9. Vorrichtung nach Anspruch 7, in der dem Preßkopf eine Strangpreßvorrichtung für die gemeinsame Öffnung (22a) und wenigstens eine weitere Strangpreßvorrichtung für die wenigstens eine zusätzliche Öffnung (22b) zugeordnet ist.

10. Vorrichtung nach Anspruch 9, in der die Einrichtung zum Auswählen und Steuern der ersten und der zweiten Betriebsart der Vorrichtung eine Schalteinrichtung enthält, die die zweite Strangpreßvorrichtung in der ersten Betriebsart der Vorrichtung außer Betrieb hält und die die weitere Strangpreßvorrichtung in der zweiten Betriebsart der Vorrichtung in Betrieb hält.

11. Vorrichtung nach Anspruch 7 oder 8, in der die Einrichtung zum Auswählen und Steuern der ersten und der zweiten Betriebsart der Vorrichtung ein Tor enthält, das im Preßkopf angeordnet ist, um ein Strangpressen des Synthetikharzmaterials von der zusätzlichen Öffnung wahlweise zu erlauben und zu unterbrechen.

12. Vorrichtung nach Anspruch 7, 8, 9, 10 oder 11, in der die Einrichtung zum Auswählen und Steuern der ersten und der zweiten Betriebsart der Vorrichtung eine Führungseinrichtung (32) enthält, die so beschaffen ist, daß sie zwischen einer ersten Position zum Bilden des ersten Segments und einer zweiten Position zum Bilden des zweiten Segments bewegt werden kann.

13. Vorrichtung nach Anspruch 12, in der die Führungsvorrichtung eine Schneideeinrichtung enthält, die das von der zusätzlichen Öffnung stranggepreßte Synthetikharzmaterial schneidet, wenn ein Wechsel von der ersten Betriebsart zur zweiten Betriebsart und umgekehrt erfolgt.

14. Windschutzscheibenformteil (4) für Kraftfahrzeuge oder dergleichen, das mit dem Verfahren nach einem der Ansprüche 1 bis 6 hergestellt ist, im Querschnitt massiv ist und enthält:

einen langgestreckten Hauptkörper (5a) zum Abdekken eines Spalts (9) zwischen einer Kraftfahrzeugkarosserie-Platte (8, 8a) und oberen und seitlichen Kanten einer Windschutzscheibe (2), wobei der Hauptkörper (5a) ein Synthetikharzmaterial enthält, das in einen Querschnitt stranggepreßt ist, der in Längsrichtung des Hauptkörpers (5a) im wesentlichen konstant ist, und das ein Kernelement (11) mit relativ zum Synthetikharzmaterial niedriger Dehnung besitzt, das einteilig mit diesem ausgebildet ist; wobei der Hauptkörper (5a) eine äußere Oberfläche und eine Rückseite besitzt; und
eine Einrichtung (5d, 5e, 5f), die an der Rückseite des Hauptkörpers (5a) vorgesehen ist, um mit der Windschutzscheibe (2) und/oder der Kraftfahrzeugkarosserie-Platte (8, 8a) in Eingriff zu gelangen, um dadurch das Formteil (4) unbeweglich zu halten;

wobei der Hauptkörper (5a) ein oberes Segment (5), das sich längs der Oberkante der Windschutzscheibe (2) erstreckt, ein Seitensegment (6), das sich längs der Seitenkante der Windschutzscheibe (2) erstreckt, sowie ein Ecksegment (7) besitzt, das das obere Segment (5) und die Seitensegmente (6) einteilig und kontinuierlich miteinander verbindet;
wobei die äußere Oberfläche des Hauptkörpers (5a) längs des Seitensegments (6) einteilig mit einer Leiste (12) versehen ist, die in einer die äußere Oberfläche des Hauptkörpers (5a) schneidenden Richtung vorsteht, so daß das Formteil (4) längs des oberen Segments (5) einen ersten Querschnitt, längs des Seitensegments (6) einen zweiten Querschnitt und im Eckabschnitt, der das obere Segment mit den Seitensegmenten verbindet, einen dritten Querschnitt aufweist, wobei der zweite Querschnitt vom ersten Querschnitt verschieden ist und der dritte Querschnitt durch das Ecksegment allmählich vom ersten Querschnitt zum zweiten Querschnitt übergeht;
wobei die Leiste (12) im oberen Segment im wesentlichen nicht vorhanden ist, jedoch längs des Seitensegments (6) des Hauptkörpers (5a) ein Wehr (13) bildet, wenn das Formteil (4) an seinem Ort angebracht ist, so daß auf der Windschutzscheibe (2) befindliches Wasser durch das Wehr (13) gesammelt und so geführt wird, daß es längs des Wehrs (13) fließt und dabei davon abgehalten wird, über das Formteil (5) zu fließen;
wobei die Leiste (12) ein Synthetikharzmaterial enthält, das synchron mit dem den Hauptkörper (5a) bildenden Synthetikharzmaterial stranggepreßt wird und mit diesem einteilig verschweißt ist.

15. Windschutzscheibenformteil (4) nach Anspruch 14, bei dem die Leiste (14) ein Synthetikharzmaterial enthält, das im wesentlichen das gleiche wie das den Hauptkörper (5a) bildende Synthetikharzmaterial ist.

16. Windschutzscheibenformteil (4) nach Anspruch 14 oder 15, bei dem die Leiste (12) ein Synthetikharzmaterial enthält, das sich hinsichtlich der Farbe von dem den Hauptkörper (5a) bildenden Synthetikharzmaterial unterscheidet.

17. Windschutzscheibenformteil (4) nach Anspruch 14, 15 oder 16, bei dem die Leiste (12) ein Synthetikharzmaterial enthält, das sich hinsichtlich der Lichtdurchlässigkeit von dem den Hauptkörper (5a) bildenden Synthetikharzmaterial unterscheidet.

18. Windschutzscheibenformteil (4) nach Anspruch 14, 15, 16 oder 17, bei dem die Leiste (12) ein Synthetikharzmaterial enthält, das sich hinsichtlich der Härte von dem den Hauptkörper (5a) bildenden Synthetikharzmaterial unterscheidet.

19. Windschutzscheibenformteil (4) nach irgendeinem der Ansprüche 14 bis 18, bei dem die äußere Oberfläche des Hauptkörpers (5a) längs des oberen Segments (5) im wesentlichen glatt ist.

20. Windschutzscheibenformteil (4) nach irgendeinem der Ansprüche 14 bis 19, bei dem die äußere Oberfläche des Hauptkörpers (5a) über die gesamte Länge des Formteils (4) in einem Bereich, in dem keine Leiste (12) vorhanden ist, mit einem länglichen Zierstreifen (10) versehen ist.

**Revendications**

1. Procédé pour fabriquer des joints de pare-brise, les joints ayant une section transversale pleine et comprenant une pluralité de segments raccordés entre eux dans la direction longitudinale du joint, chaque segment possédant une partie commune de section transversale qui est commune à tous les segments et comprend le corps principal du joint, au moins un segment comportant en outre au moins une partie additionnelle de section transversale qui comprend une nervure servant à former un déversoir lorsque le joint est utilisé, ledit procédé étant mis en oeuvre en utilisant une seule tête de filière d'extrusion (22) comportant un orifice commun (22a) possédant une section transversale, qui correspond à celle de ladite partie commune de section transversale du joint fini, et comportant au moins un orifice additionnel (22b) possédant une section transversale qui correspond à celle de ladite partie additionnelle de section transversale du joint fini; et comprenant les étapes consistant à :

exécuter alternativement et en continu une première phase d'extrusion, lors de laquelle une matière formée de résine synthétique fondue est extrudée par ledit orifice commun de ladite tête de filière d'extrusion pour former un premier segment (5), une seconde phase d'extrusion, lors de laquelle des résines synthétiques fondues sont extrudées par ledit orifice commun et au moins l'un desdits orifices additionnels de ladite tête de filière d'extrusion, et sont amenées à adhérer entre elles alors qu'elles sont encore suffisamment chaudes pour établir une adhérence ou sont maintenues réunies par adhérence, pour former un second segment (7) correspondant au segment latéral du joint et possédant ladite nervure servant à former un déversoir;

amener continûment à ladite tête de filière un élément de noyau (11) présentant un faible allongement par rapport à ladite résine synthétique de sorte que ledit élément de noyau est extrudé d'un seul tenant avec ladite partie commune de section transversale dans les deux phases d'extrusion; et

déterminer la longueur d'extrusion de la résine synthétique à partir dudit orifice commun et exécuter une commutation de ladite première phase d'extrusion à ladite seconde phase d'extrusion et vice versa, en fonction de la longueur déterminée de la résine synthétique.

2.  Procédé selon la revendication 1, dans lequel une résine synthétique fondue est extrudée à partir dudit orifice additionnel pendant la première phase d'extrusion et est empêchée d'adhérer à ladite résine synthétique, extrudée à partir dudit orifice commun.

3.  Procédé selon la revendication 2, comprenant en outre l'étape consistant à découper ladite résine synthétique, extrudée à partir dudit orifice additionnel lors de l'exécution d'une commutation de ladite première phase d'extrusion à ladite seconde phase d'extrusion, et vice versa.

4.  Procédé selon la revendication 1, 2 ou 3, comprenant en outre l'étape consistant à utiliser une extrudeuse commune apte à envoyer une résine synthétique fondue audit orifice commun de ladite tête de filière, ainsi qu'au moins une extrudeuse additionnelle apte à envoyer une résine synthétique fondue audit au moins un orifice additionnel de ladite tête de filière.

5.  Procédé selon l'une quelconque des revendications précédentes, dans lequel les résines synthétiques sont extrudées à partir dudit orifice commun et dudit au moins un orifice additionnel de telle sorte que ledit au moins un segment possède ladite partie commune de section transversale, qui a une couleur, une transparence et/ou une dureté qui diffère de celle de ladite partie additionnelle de section transversale de ce segment.

6.  Procédé selon l'une quelconque des revendications précédentes, comprenant en outre les étapes consistant à :

utiliser une seule extrudeuse adaptée pour envoyer une résine synthétique fondue auxdits orifices de ladite tête de filière; et

maintenir, pendant la formation d'un segment sans ladite partie additionnelle de section transversale, la résine synthétique extrudée à partir dudit orifice commun, séparée de ladite résine synthétique extrudée à partir dudit orifice additionnel.

7.  Dispositif pour fabriquer des joints de pare-brise, les joints ayant une section transversale pleine et comprenant une pluralité de segments raccordés entre eux dans la direction longitudinale du joint, chaque segment possédant une partie commune de section transversale qui est commune à tous les segments et comprend le corps principal du joint, au moins un segment comportant en outre au moins une partie additionnelle de section transversale qui comprend une nervure servant à former un déversoir lorsque le joint est utilisé, ledit dispositif comprenant :

une seule tête de filière d'extrusion (22) pour extruder une résine synthétique et pourvue d'un orifice commun ayant une section transversale qui correspond à celle de ladite partie commune de section transversale d'un segment du joint fini, et également possédant au moins un orifice additionnel ayant une section transversale correspondant à celle de ladite partie additionnelle de section transversale dudit au moins un segment du joint fini;

des moyens (18,19,21) pour amener à ladite tête de filière d'extrusion un élément de noyau (11) possédant un allongement faible par rapport à celui de ladite résine synthétique de sorte que ledit élément de noyau est extrudé d'un seul tenant avec ladite partie commune de section transversale;

des moyens pour déterminer la longueur d'extrusion de la résine synthétique à partir dudit orifice commun; et

des moyens (26) pour sélectionner et commander des premier et second modes de fonctionnement du dispositif en fonction de ladite longueur déterminée de telle sorte que, dans ledit premier mode de fonctionnement du dispositif, la résine synthétique est extrudée à partir dudit orifice commun de ladite tête de filière pour former un premier corps extrudé correspondant à un premier segment (5) et, dans ledit second mode de fonctionnement du dispositif, des résines synthétiques sont extrudées à partir dudit orifice commun et d'au moins un orifice additionnel de ladite tête de filière et sont amenées à adhérer entre elles alors qu'elles sont encore suffisamment chaudes pour établir une adhérence ou sont maintenues réunies par adhérence, pour former un second corps extrudé correspondant à un segment latéral (7) du joint et comportant ledit déversoir.

8. Dispositif selon la revendication 7, dans lequel la tête de filière est associée à une seule extrudeuse.

9. Dispositif selon la revendication 7, dans lequel ladite tête de filière est associée à une extrudeuse pour ledit orifice commun (22a), et à au moins une autre extrudeuse pour ledit au moins un orifice additionnel (22b).

10. Dispositif selon la revendication 9, dans lequel lesdits moyens de sélection et de commande des premier et second modes de fonctionnement du dispositif comprennent des moyens de commutation pour maintenir ladite autre extrudeuse à l'arrêt pendant ledit premier mode de fonctionnement du dispositif, et pour maintenir ladite autre extrudeuse en fonctionnement pendant ledit second mode de fonctionnement du dispositif.

11. Dispositif selon la revendication 7 ou 8, dans lequel lesdits moyens de sélection et de commande des premier et second modes de fonctionnement du dispositif comprennent une porte disposée dans ladite tête de filière pour permettre et interrompre de façon sélective l'extrusion de la résine synthétique à partir dudit orifice additionnel.

12. Dispositif selon la revendication 7, 8, 9, 10 ou 11, dans lequel lesdits moyens de sélection et de commande des premier et second modes de fonctionnement du dispositif comprennent des moyens de guidage (32) aptes à être déplacés entre une première position pour former ledit premier segment et une seconde position pour former ledit second segment.

13. Dispositif selon la revendication 12, dans lequel ledit dispositif de guidage comprend des moyens en forme de couteaux pour couper ladite résine synthétique extrudée à partir dudit orifice additionnel lors de l'exécution d'une commutation dudit premier mode de fonctionnement audit second mode de fonctionnement et vice versa.

14. Joint (4) de pare-brise fabriqué conformément au procédé selon l'une quelconque des revendications 1 à 6 pour des automobiles ou analogues, ledit joint ayant une section transversale pleine, et comprenant :

un corps principal allongé (5a) servant à recouvrir un intervalle (9) entre un panneau de carrosserie d'automobile (8,8a) et les bords supérieurs et latéral d'une plaque de pare-brise (2), ledit corps principal (5a) comprenant une résine synthétique extrudée avec une section transversale qui est essentiellement constante dans une direction longitudinale du corps principal (5a) et possédant un élément de noyau (11) présentant un faible allongement par rapport à la résine synthétique qui en est solidaire; ledit corps principal (5a) possédant une surface extérieure et une face arrière; et des moyens (5d,5e,5f) prévus sur le côté arrière du corps principal (5a) destinés à s'appliquer contre la plaque de pare-brise (2) et/ou le panneau de carrosserie automobile (8,8a) pour retenir ainsi le joint (4) en position;

ledit corps principal (5a) possédant un segment supérieur (5) destiné à s'étendre le long du bord supérieur de la plaque de pare-brise (2), un segment latéral (6) destiné à s'étendre le long du bord latéral de la plaque de pare-brise (2), et un segment de coin (7) raccordant d'un seul tenant et continûment lesdits segments supérieur et latéral (5,6) entre eux;

ladite surface extérieure du corps principal (5a) étant pourvue d'une nervure (12) qui en est solidaire et s'étend le long dudit segment latéral (6), ladite nervure (12) faisant saillie dans une direction recoupant la surface extérieure du corps principal (5a) de sorte que ledit joint (4) possède une première section transversale le long dudit segment supérieur (5), et une seconde section transversale le long dudit élément latéral (6) et une troisième section transversale dans la section de coin réunissant lesdits segments supérieur et latéral, ladite seconde section transversale étant différente de ladite première section transversale, et ladite troisième section transversale variant graduellement depuis la première section transversale à la seconde section transversale, au niveau du segment de coin;

ladite nervure (12) étant essentiellement absente dans le segment supérieur, mais formant un déversoir (13) le long dudit segment latéral (6) du corps principal (5a) lorsque le joint (4) est monté en position, de telle sorte que l'eau sur la plaque de pare-brise (2) est collectée par le déversoir (13) et est guidée de manière à circuler le long de ce dernier tout en étant empêchée de circuler au travers du joint (5);

ladite nervure (12) comprenant une résine synthétique, extrudée en même temps que la résine synthétique constituant le corps principal (5a) et soudée d'un seul tenant à cette dernière.

15. Joint (4) de pare-brise selon la revendication 14, dans lequel ladite nervure (12) comprend une résine synthétique, qui est essentiellement identique à la résine synthétique constituant le corps principal (5a).

16. Joint (4) de pare-brise selon la revendication 14 ou 15, dans lequel ladite nervure (12) comprend une résine synthétique, dont la couleur diffère de celle de la résine synthétique constituant le corps principal (5a).

17. Joint (4) de pare-brise selon la revendication 14, 15 ou 16, dans lequel ladite nervure (12) comprend une résine synthétique, dont la transparence diffère de celle de la résine synthétique constituant le corps principal (5a).

18. Joint (4) de pare-brise selon la revendication 14, 15, 16 ou 17, dans lequel ladite nervure (12) comprend une résine synthétique, dont la dureté diffère de la résine synthétique constituant le corps principal (5a).

19. Joint (4) de pare-brise selon l'une quelconque des revendications 14 à 18, dans lequel ladite surface extérieure du corps principal (5a) est essentiellement lisse le long dudit segment supérieur (5).

20. Joint (4) de pare-brise selon l'une quelconque des revendications 13 à 14, dans lequel ladite surface extérieure du corps principal (5a) est pourvue d'une bande longitudinale formant enjoliveur (10) qui s'étend sur toute la longueur du joint (4), dans une zone qui ne comporte pas ladite nervure (12).

# FIG_1

## FIG_2

## FIG_3

EP 0 419 738 B1

## FIG.4

## FIG.5

## FIG.6

## FIG.7

**FIG_8**

*31a 31b 25*

*33*

*32 30*

**FIG_9**

*22*

*22a*
*23a*

*22b*

*23b*

**FIG_10**

X

Cutter Displacement

6    7    5    7    6    6    7    5
$l_1$  $l_2$  $l_3$  $l_2$  $l_1$  $l_1$  $l_2$  $l_3$

Y

Feeding Length

EP 0 419 738 B1

## FIG_11

## FIG_12

## FIG_13

## FIG_14

## FIG_15